(19) Europäisches Patentamt
European Patent Office
Office européen des brevets

(11) **EP 4 088 981 A2**

(12) **EUROPEAN PATENT APPLICATION**

(43) Date of publication:
**16.11.2022 Bulletin 2022/46**

(21) Application number: **22187254.2**

(22) Date of filing: **27.07.2022**

(51) International Patent Classification (IPC):
**B60W 60/00** (2020.01)   **B60W 50/10** (2012.01)
**B60W 50/00** (2006.01)

(52) Cooperative Patent Classification (CPC):
**B60W 60/001; B60W 50/00; B60W 50/10;
B60W 60/0015;** B60W 2050/0088

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:   **07.09.2021   CN 202111042826**

(71) Applicant: **Beijing Baidu Netcom
Science Technology Co., Ltd.
Beijing 100085 (CN)**

(72) Inventors:
• **YANG, Kai
Beijing, 100085 (CN)**
• **ZHANG, Lei
Beijing, 100085 (CN)**
• **ZHANG, Wuzhao
Beijing, 100085 (CN)**
• **YIN, Qijuan
Beijing, 100085 (CN)**
• **LI, Zhenyu
Beijing, 100085 (CN)**
• **WANG, Yunpeng
Beijing, 100085 (CN)**
• **CHEN, Zhuo
Beijing, 100085 (CN)**
• **CHEN, Jingkai
Beijing, 100085 (CN)**

(74) Representative: **Nederlandsch Octrooibureau
P.O. Box 29720
2502 LS The Hague (NL)**

(54) **METHOD AND APPARATUS FOR AUTONOMOUS DRIVING, AND ELECTRONIC DEVICE**

(57)   The present disclosure provides a method and apparatus for autonomous driving and an electronic device, relates to the technical field of artificial intelligence, and in particular, to the technical field of autonomous driving. An implementation plan is: planning a control mode of a target vehicle through an initial planning algorithm, to obtain an initial control mode; determining a first precondition that the target vehicle in an expected traveling state satisfies a preset safety rule, the expected traveling state being an expected state of the target vehicle after the target vehicle is controlled according to the initial control mode; determining whether the first precondition is established; and if yes, controlling the target vehicle according to the initial control mode. The above solution of the present disclosure may realize verification of the initial control mode determined according to the planning algorithm of an autonomous driving system, so that the vehicle may run in a safe framework according to the preset safety rule, and the safety of the autonomous driving system may be improved.

Fig. 1

**Description**

TECHNICAL FIELD

The present disclosure relates to the technical field of artificial intelligence, and in particular, to the technical field of autonomous driving.

BACKGROUND

At present, autonomous driving has gradually entered people's daily life. Most of the existing autonomous driving strategies use machine learning to control driving behavior through algorithms.

SUMMARY

The present disclosure provides a method and apparatus for autonomous driving and an electronic device.
According an aspect, a method for autonomous driving is provided, which includes:

planning a control mode of a target vehicle through an initial planning algorithm, to obtain an initial control mode;

determining a first precondition that the target vehicle in an expected traveling state satisfies a preset safety rule, the expected traveling state being an expected state of the target vehicle after the target vehicle is controlled according to the initial control mode; and

determining whether the first precondition is established;

controlling the target vehicle according to the initial control mode, if the first precondition is established.

According to another aspect, an apparatus for autonomous driving is provided, which includes:

a control mode planning module, configured to plan a control mode of a target vehicle through an initial planning algorithm, to obtain an initial control mode;

a first precondition determining module, configured to determine a first precondition that the target vehicle in an expected traveling state satisfies a preset safety rule, the expected traveling state being an expected state of the target vehicle after the target vehicle is controlled according to the initial control mode;

a target vehicle controlling module, configured to control the target vehicle according to the initial control mode, if the first precondition is established.

According to another aspect, a non-transitory computer readable storage medium storing computer instructions, where the computer instructions are used to cause the computer to perform the method for autonomous driving.
According to another aspect, a computer program product, including a computer program, where the computer program, when executed by a processor, implements the method for autonomous driving.
It should be understood that the content described in this section is not intended to identify key or important features of the embodiments of the present disclosure, nor is it intended to limit the scope of the present disclosure. Other features of the present disclosure will become readily understood from the following specification.

BRIEF DESCRIPTION OF THE DRAWINGS

The accompanying drawings are used for better understanding of the present solution, and do not constitute a limitation to the present disclosure.

Fig. 1 is a schematic flowchart of a method for autonomous driving according to the present disclosure;

Fig. 2 is another schematic flowchart of the method for autonomous driving according to the present disclosure;

Fig. 3 is another schematic flowchart of the method for autonomous driving according to the present disclosure;

Fig. 4 is another schematic flowchart of the method for autonomous driving according to the present disclosure;

Fig. 5 is another schematic flowchart of the method for autonomous driving according to the present disclosure;

Fig. 6 is a schematic structural diagram of an apparatus for autonomous driving according to the present disclosure; and

Fig. 7 is a block diagram of an electronic device adapted to implement the method for autonomous driving of embodiments of the present disclosure.

DETAILED DESCRIPTION OF EMBODIMENTS

Example embodiments of the present disclosure are described below with reference to the accompanying drawings, where various details of the embodiments of the present disclosure are included to facilitate understanding, and should be considered merely as examples. Therefore, those of ordinary skills in the art should realize that various changes and modifications can be made to the embodiments described herein without departing from the scope and spirit of the present disclosure. Similarly, for clearness and conciseness, descriptions of well-known functions and structures are omitted in the following description.

In current autonomous driving strategies, machine learning is often used directly to learn human driving behavior, but human driving behavior has many uncertainties, such as a behavior when encountering abnormal weather while driving, or a behavior when there is an accident of a surrounding vehicle. Therefore, the driving behavior learned based on machine learning also has certain uncertainties. At the same time, since there is no method for safety verification of autonomous driving strategies using the machine learning, it is difficult for the existing autonomous driving strategies to ensure the safety of autonomous driving.

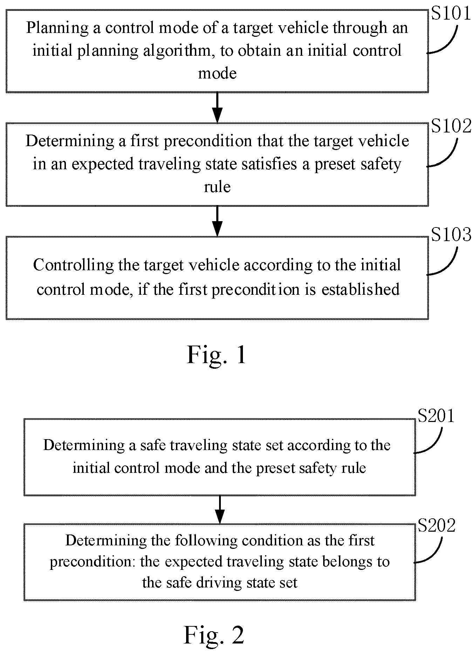

Based on the above technical problems, an embodiment of the present disclosure provides a method for autonomous driving, as shown in Fig. 1, including following steps.

S101 includes planning a control mode of a target vehicle through an initial planning algorithm, to obtain an initial control mode.

S102 includes determining a first precondition that the target vehicle in an expected traveling state satisfies a preset safety rule.

S103 includes controlling the target vehicle according to the initial control mode, if the first precondition is established.

Using this embodiment, the initial control mode is obtained according to the initial planning algorithm, the expected traveling state is determined according to the initial control mode, and whether the first precondition is established is determined, and if the first precondition is established, it may be considered that after the target vehicle is controlled according to the initial control mode, the target vehicle meets the preset safety rule. Therefore, it is verified that controlling the target vehicle according to the initial control mode may make the target vehicle drive according to the preset safety rule, and the verification of the initial control mode is realized. Although there are certain uncertainties in the initial control mode, since in the present disclosure, the vehicle is controlled according to the initial control mode under the condition that the initial control mode is verified, the vehicle may drive safely according to the preset safety rule, thereby improving the safety of an autonomous driving system.

In S101, a user may input a driving instruction into the autonomous driving system of the target vehicle, such as a driving destination, or a limit of vehicle speed. After the target vehicle receives the driving instruction from the user, the driving instruction may be input into the initial planning algorithm, through the initial planning algorithm and according to the driving instruction of the user, the initial control mode for the target vehicle is obtained by calculation. Here, the initial planning algorithm may be any algorithm used by the autonomous driving system to plan a vehicle control mode according to the driving instruction, or may be a trained neural network model that may output a vehicle control mode, which is not limited in the present disclosure.

In a possible embodiment, the driving instruction may alternatively be a traveling instruction generated by the target vehicle based on automatically detected road conditions during traveling. For example, during traveling, when detecting that a turn needs to be made in a road ahead, or the road ahead is congested, etc., the target vehicle generates a corresponding driving instruction by itself, and inputs the driving instruction into the initial planning algorithm to obtain the initial control mode for the target vehicle.

In S102, the expected traveling state is an expected state of the target vehicle after the target vehicle is controlled according to the initial control mode. After the initial control mode for the target vehicle is obtained, the expected traveling state of the target vehicle may be determined according to the initial control mode.

In a possible embodiment, the initial control mode is expressed in the form of control parameters such as vehicle acceleration and direction, and the expected traveling state of the target vehicle may be calculated according to relevant kinematic principles and the above control parameters included in the initial control mode, for example, according to a preset algorithm and parameters representing the initial control mode of the target vehicle such as acceleration, the state of the target vehicle while traveling such as a distance between the target vehicle and a front vehicle, a distance between the target vehicle and a vehicle at a side of the targe vehicle, or a speed of the vehicle, may be calculated as the expected traveling state.

For example, if the current speed of the vehicle is 50Km/h, and the initial control mode is to accelerate the vehicle at an acceleration of 5m/s$^2$ for 1 second, it may be calculated that the speed of the vehicle in the expected traveling state is 68Km/h.

In a possible embodiment, it may be considered that the expected traveling state of the target vehicle after the target vehicle is controlled according to the initial control mode is slightly different from a current actual traveling state of the target vehicle. For example, the initial control mode may only adjust the direction of the target vehicle, and other parameters such as speed have not changed, therefore, the current traveling state of the target vehicle may be used as the expected traveling state.

The preset safety rule may be a safety regulation for the traveling state of the target vehicle, such as a regulation for a minimum safe distance between the target vehicle and the front vehicle while the target vehicle is traveling, or a regulation for the maximum speed that the target vehicle can reach, which is not limited in the present disclosure. In a possible embodiment, the preset safety rule is a safety rule based on a responsibility sensitive safety (RSS) model.

In S103, when the target vehicle is in the expected traveling state and the target vehicle satisfies the preset safety rule, it may be determined that the first precondition is established, and in this case, the target vehicle is controlled according to the initial control mode that can establish the first precondition. Taking the preset safety rule being the safety rule based on the RSS model as an example, the initial control mode is obtained through the initial planning algorithm, the target vehicle is controlled according to the obtained initial control mode, and the expected traveling state of the target vehicle is obtained according to the preset algorithm. If the expected traveling state shows that the minimum distance between the target vehicle and the front vehicle is 7m, and the safety rule based on the RSS model determines that the minimum distance between the target vehicle and the front vehicle is 5m, it may be understood that the target vehicle in the expected traveling state satisfies the preset safety rule, therefore, the first precondition is established, and controlling the target vehicle according to the obtained initial control mode may make the target vehicle drive safely.

In a possible embodiment, as shown in Fig. 2, the determining a first precondition that the target vehicle in an expected traveling state satisfies a preset safety rule, may specifically include following steps.

S201 includes determining a set of safe traveling states according to the initial control mode and the preset safety rule.

S202 includes determining the following condition as the first precondition: the expected traveling state belongs to the set of safe traveling states.

In S201, the set of safe traveling states is a set of traveling states in which the traveling of the target vehicle satisfies the preset safety rule after the target vehicle is controlled according to the initial control mode. Parameters representing the initial control mode may include the control parameters such as vehicle acceleration and direction, and these control parameters are input into the preset safety rule to obtain traveling states of the target vehicle that satisfy the preset safety rule under this initial control mode. For example, the preset safety rule may be a limit on the maximum speed of the vehicle. In this case, the parameters in the initial control mode may be input into the preset safety rule to obtain the maximum speed of the target vehicle that satisfies the preset safety rule, and a set of all the traveling states of the target vehicle whose traveling speed is smaller than the maximum speed may be used as the set of safe traveling states of the target vehicle.

In a possible embodiment, the preset safety rule may alternatively be a safety rule based on the RSS model. In this embodiment, the control parameters in the initial control mode are input into the RSS model, and the minimum distance between the target vehicle and the front vehicle while the target vehicle is traveling outputted by the RSS model is obtained. For example, control parameters such as a speed $v_r$ of the rear vehicle, a response time p, a maximum acceleration $a_{max}$ in normal traveling, a maximum deceleration $a_{min}$ of sudden braking, and a speed $v_f$ of the front vehicle are obtained from the control parameters representing the initial control mode. The above parameters are input into formula (1) to obtain the minimum distance $d_{min}$ between the target vehicle and the front vehicle when the target vehicle satisfies the preset safety rule, and this set of all traveling states of the target vehicle whose distance to the front vehicle is greater than this minimum distance is used as the set of safe traveling states of the target vehicle.

In the present embodiment, when the target vehicle is the rear vehicle in the RSS model, the front vehicle in the RSS model may be the front vehicle closest to the target vehicle, and the above speed $v_r$ of the rear vehicle refers to the speed of the target vehicle in this case. The response time $\rho$ refers to a reaction period that the front vehicle starts braking with the maximum braking acceleration, and the rear vehicle is aware of the braking. The maximum acceleration $a_{max}$ in normal traveling refers to the maximum acceleration of the target vehicle under the control of the initial control mode. The maximum deceleration $a_{min}$ of sudden braking refers to the maximum deceleration of the target vehicle when the target vehicle is suddenly braked under the control of the initial control mode. The speed $v_f$ of the front vehicle refers to a current speed of the front vehicle.

Formula (1) is as follows:

$$d_{min} = \left[v_r \, \rho \, + \frac{1}{2}a_{max} \, \rho^2 + \frac{(v_r + \rho \, a_{max})^2}{2a_{min}} - \frac{v_f^2}{2a_{max}}\right] \qquad \text{formula (1)}$$

It may be understood that the above formula (1) is only an approach to calculate the minimum distance between the target vehicle and the front vehicle, and any simple variation of this formula, such as formula (2) and formula (3), should also be included in the protection scope of the present disclosure.

Formula (2) is:

$$d_{min} = \left[v_r \, \rho \, + a_{max} \, \rho^2 + \frac{(v_r + \rho \, a_{max})^2}{2a_{min}} - \frac{v_f^2}{2a_{max}}\right] \qquad \text{formula (2),}$$

Formula (3) is:

$$d_{min} = \left[v_r \, \rho \, + \frac{1}{2}a_{max} \, \rho^2 + \frac{(v_r + \rho \, a_{max})^2}{2a_{min}} - \frac{v_f^2}{a_{max}}\right] \qquad \text{formula (3).}$$

The above embodiment is only an example for determining the set of safe traveling states for ease of understanding. The set of safe traveling states may alternatively be a set of safe traveling states in which the target vehicle satisfies other preset safety rules in the existing technology, which is not limited in the present disclosure.

In S202, the expected traveling state is compared with the set of safe traveling states, to determine whether the expected traveling state is in the set of safe traveling states. For example, if the set of safe traveling states includes all cases where the speed of the target vehicle satisfies the preset safety rule, the speed of the target vehicle in the expected traveling state is used to search the set of safe traveling states. It may be understood that, when the speed of the target vehicle in the expected traveling state is found in the set of safe traveling states, it may be considered that the expected traveling state belongs to the set of safe traveling states.

In a possible embodiment, the set of safe traveling states includes all the cases where the minimum distance between the target vehicle and the front vehicle satisfies the preset safety rule, then the distance between the target vehicle in the expected traveling state and the front vehicle is used to search the set of safe traveling states. It may be understood that, when the distance between the target vehicle in the expected traveling state and the front vehicle is found in the set of safe traveling states, it may be considered that the expected traveling state belongs to the set of safe traveling states.

It may be understood that, for different sets of safe traveling states, the first precondition may be different, which is not limited in the present disclosure.

Using the above embodiment of the present disclosure, safe traveling states may be determined according to the initial control mode and the preset safety rule, so as to compare a preset traveling state with the set of safe traveling states to determine the first precondition, so that when the obtained first precondition is established, the traveling state of the target vehicle is a safe traveling state satisfying the preset safety rule, and further, the safety of the autonomous driving system is improved.

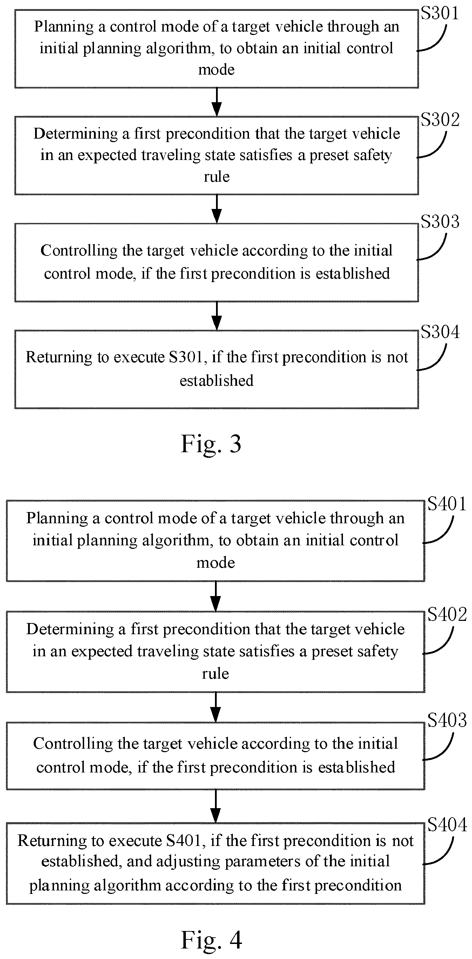

In an embodiment, the expected traveling state of the target vehicle determined according to the initial control mode may not satisfy the preset safety rule. It may be understood that in this case, the first precondition is not established. Therefore, as shown in Fig. 3, the present disclosure also provides a method for autonomous driving, including following steps.

S301 includes planning a control mode of a target vehicle through an initial planning algorithm, to obtain an initial control mode.

This step is the same as the foregoing S101, and reference may be made to the relevant description of the foregoing S101, and detailed description thereof will be omitted.

S302 includes determining a first precondition that the target vehicle in an expected traveling state satisfies a preset safety rule.

This step is the same as the foregoing S102, and reference may be made to the relevant description of the foregoing S102, and detailed description thereof will be omitted.

S303 includes controlling the target vehicle according to the initial control mode, if the first precondition is established.

This step is the same as the foregoing S103, and reference may be made to the relevant description of the foregoing S103, and detailed description thereof will be omitted.

S304 includes returning to execute S301, if the first precondition is not established.

It may be understood that, when it is determined that the first precondition is not established, if the target vehicle is still controlled according to the initial control mode, the expected traveling state does not satisfy the preset safety rule, which may lead to a safety accident on the target vehicle. Therefore, in this case, it is necessary to return to the step of S301 to obtain a new control mode, until when the vehicle is controlled according to the new control mode, a new first precondition determined under the new control mode can be established.

Using the above embodiment of the present disclosure, the initial control mode obtained through the initial planning algorithm may be verified, so that when the expected traveling state of the target vehicle does not satisfy the preset safety rule, a new control mode may be obtained to control the vehicle. The target vehicle may run in a safe framework according to the preset safety rule, which further improves the verifiability and safety of the autonomous driving system.

In a possible embodiment, as shown in Fig. 4, the present disclosure also provides a method for autonomous driving, including following steps.

S401 includes planning a control mode of a target vehicle through an initial planning algorithm, to obtain an initial control mode.

This step is the same as the foregoing S101, and reference may be made to the relevant description of the foregoing S101, and detailed description thereof will be omitted.

S402 includes determining a first precondition that the target vehicle in an expected traveling state satisfies a preset safety rule.

This step is the same as the foregoing S102, and reference may be made to the relevant description of the foregoing S102, and detailed description thereof will be omitted.

S403 includes controlling the target vehicle according to the initial control mode, if the first precondition is established.

This step is the same as the foregoing S103, and reference may be made to the relevant description of the foregoing S103, and detailed description thereof will be omitted.

S404 includes returning to execute S401, if the first precondition is not established, and adjusting parameters of the initial planning algorithm according to the first precondition.

It may be understood that when the first precondition is not established, controlling the vehicle according to the initial control mode may not ensure the safety of autonomous driving of the vehicle. Therefore, it is necessary to return to step S401 to obtain a new control mode, and when the new control mode is obtained, the initial planning algorithm used to obtain the initial control mode may be adjusted according to the first precondition. For example, if the first precondition is a condition related to the maximum speed of the target vehicle in the expected traveling state, parameters related to the maximum speed of the target vehicle may be adjusted in the initial planning algorithm. As another example, if the first precondition is a condition regarding the minimum distance between the target vehicle in the expected traveling state and the front or rear vehicle, parameters related to the minimum distance of the target vehicle may be adjusted in the initial planning algorithm, so as to obtain a new control mode to control the operation of the vehicle.

Using the above embodiment of the present disclosure, targeted adjustment may be made to the parameters of the initial planning algorithm, so that after the target vehicle is controlled according to the initial control mode, in the case where the expected traveling state cannot satisfy the preset safety rule, a control approach that can make the traveling state of the target vehicle satisfy the preset safety rule is obtained more quickly, which improves the efficiency of the planning algorithm.

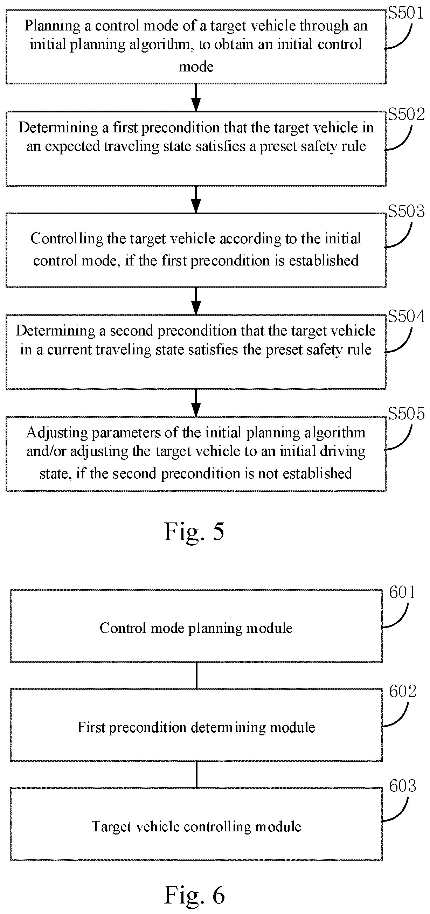

As described above, after initial planning of the target vehicle and obtaining the initial control mode, the expected traveling state of the target vehicle may be determined. However, in actual autonomous driving of the target vehicle, due to the interference of various uncertain factors, the traveling state of the target vehicle does not always match the expected traveling state. Therefore, when the target vehicle actually travels according to the initial control mode, a current traveling state of the target vehicle may also be checked. Based on this, the present disclosure also provides a method for autonomous driving, as shown in Fig. 5, the method includes following steps.

S501 includes planning a control mode of a target vehicle through an initial planning algorithm, to obtain an initial control mode.

This step is the same as the foregoing S101, and reference may be made to the relevant description of the foregoing S101, and detailed description thereof will be omitted.

S502 includes determining a first precondition that the target vehicle in an expected traveling state satisfies a preset safety rule.

This step is the same as the foregoing S102, and reference may be made to the relevant description of the foregoing S102, and detailed description thereof will be omitted.

S503 includes controlling the target vehicle according to the initial control mode, if the first precondition is established.

This step is the same as the foregoing S103, and reference may be made to the relevant description of the foregoing S103, and detailed description thereof will be omitted.

S504 includes determining a second precondition that the target vehicle in a current traveling state satisfies a preset safety rule.

The current traveling state may be the current speed of the target vehicle, or may be a current distance between the target vehicle and the front or rear vehicle. The preset safety rule may be a regulation for the maximum speed of the target vehicle, or may be a regulation for the minimum distance between the target vehicle and the front vehicle, for example, a preset safety rule based on the RSS model. It may be understood that, in this case, the second precondition is determined based on the current traveling state of the target vehicle and the preset safety rule. For example, if the preset safety rule is preset based on the RSS model, the parameters input into the forgoing formula (1) may be current traveling parameters of the target vehicle. According to the calculation formula, the minimum distance between the target vehicle in the current traveling state and the front vehicle may be determined. In this case, for current traveling states of the target vehicle, a set of traveling states in which a distance from the target vehicle to the front vehicle is greater than or equal to the minimum distance may be regarded as the set of safe traveling states, and the current traveling state belonging to the set of safe traveling states may be used as the second precondition.

S505 includes adjusting parameters of the initial planning algorithm and/or adjusting the target vehicle to an initial traveling state, if the second precondition is not established.

When the second precondition is not established, it may be considered that the current traveling state of the target vehicle does not satisfy the preset safety rule, which may lead to a safety accident on the target vehicle. Therefore, in this case, the parameters of the initial planning algorithm may be adjusted to obtain a new planning algorithm, and then a new control method may be obtained, so that the current traveling state of the target vehicle satisfies the preset safety rule. For how to adjust the initial planning algorithm, reference may be made to the foregoing related description regarding S404, and detailed description thereof will be omitted.

Alternatively, in this case, the control to the target vehicle by the initial control mode may be cancelled, that is, the current traveling state of the target vehicle is restored to a state when the target vehicle is not controlled by the initial control mode, and a new control mode is re-determined through the initial planning algorithm to control the traveling of the vehicle.

The above description of the second precondition by using the minimum distance between the target vehicle and the front vehicle is only an example for the convenience of understanding. In addition, the second precondition may be the maximum speed of the target vehicle or other conditions for safe traveling in the existing technology, which is not limited in the present disclosure.

Using the above embodiment of the present disclosure, the actual traveling process of the target vehicle according to the initial control mode may be verified, so that the traveling state of the target vehicle in the actual traveling process still satisfies the preset safety rule, and safe traveling is performed, which further improves the safety of the autonomous driving system.

In the technical solution of the present disclosure, the collection, storage, use, processing, transmission, provision and disclosure of the user personal information involved are all in compliance with the relevant laws and regulations, and do not violate public order and good customs.

According to an embodiment of the present disclosure, the present disclosure also provides an apparatus for autonomous driving, as shown in Fig. 6, including following modules:

a control mode planning module 601, configured to plan a control mode of a target vehicle through an initial planning algorithm, to obtain an initial control mode;

a first precondition determining module 602, configured to determine a first precondition that the target vehicle in an expected traveling state satisfies a preset safety rule, the expected traveling state being an expected state of the target vehicle after the target vehicle is controlled according to the initial control mode; and

a target vehicle controlling module 603, configured to control the target vehicle according to the initial control mode, if the first precondition is established.

In a possible embodiment, the apparatus for autonomous driving further includes:
a control mode returning module, configured to return to execute the step of planning a control mode of a target vehicle through an initial planning algorithm, to obtain an initial control mode, if the first precondition is not established.

In a possible embodiment, the apparatus for autonomous driving further includes:
a first planning algorithm adjusting module, configured to adjust parameters of the initial planning algorithm according to the first precondition, if the first precondition is not established.

In a possible embodiment, the apparatus for autonomous driving further includes:

a second precondition determining module, configured to determine that the target vehicle satisfies a second precondition of the preset safety rule, when the target vehicle is in a current traveling state; and

a second planning algorithm adjusting module, configured to adjust parameters of the initial planning algorithm and/or adjust the target vehicle to an initial traveling state, if the second precondition is not established, where the initial traveling state is a state of target vehicle before the target vehicle is controlled according to the initial control mode.

In a possible embodiment, the first precondition determining module 602 specifically includes:

a safe traveling state set submodule, configured to determine a set of safe traveling states according to the initial control mode and the preset safety rule, where the set of safe traveling states is a set of traveling states in which the traveling of the target vehicle satisfies the preset safety rule after the target vehicle is controlled according to the initial control mode; and

a first precondition determining submodule, configured to determine a condition that the expected traveling state belongs to the set of safe traveling states as the first precondition.

According to an embodiment of the present disclosure, the present disclosure also provides an electronic device, a readable storage medium, and a computer program product.

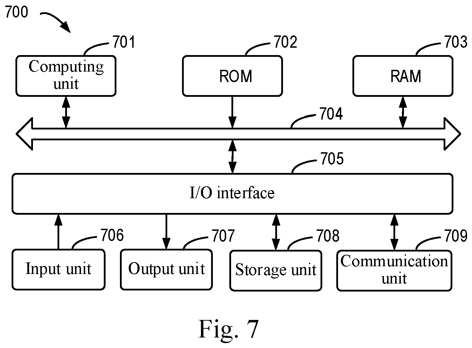

Fig. 7 illustrates a schematic block diagram of an example electronic device 700 for implementing the embodiments of the present disclosure. The electronic device is intended to represent various forms of digital computers, such as laptop computers, desktop computers, workbenches, personal digital assistants, servers, blade servers, mainframe computers, and other suitable computers. The electronic device may also represent various forms of mobile apparatuses, such as personal digital processors, cellular phones, smart phones, wearable devices, and other similar computing apparatuses. The components shown herein, their connections and relationships, and their functions are merely examples, and are not intended to limit the implementation of the present disclosure described and/or claimed herein.

As shown in Fig. 7, the device 700 includes a computing unit 701, which may perform various appropriate actions and processing, based on a computer program stored in a read-only memory (ROM) 702 or a computer program loaded from a storage unit 708 into a random access memory (RAM) 703. In the RAM 703, various programs and data required for the operation of the device 700 may also be stored. The computing unit 701, the ROM 702, and the RAM 703 are connected to each other through a bus 704. An input/output (I/O) interface 705 is also connected to the bus 704.

A plurality of parts in the device 700 are connected to the I/O interface 705, including: an input unit 706, for example, a keyboard and a mouse; an output unit 707, for example, various types of displays and speakers; the storage unit 708, for example, a disk and an optical disk; and a communication unit 709, for example, a network card, a modem, or a wireless communication transceiver. The communication unit 709 allows the device 700 to exchange information/data with other devices over a computer network such as the Internet and/or various telecommunication networks.

The computing unit 701 may be various generalpurpose and/or dedicated processing components having processing and computing capabilities. Some examples of the computing unit 701 include, but are not limited to, central processing unit (CPU), graphics processing unit (GPU), various dedicated artificial intelligence (AI) computing chips, various computing units running machine learning model algorithms, digital signal processors (DSP), and any appropriate processors, controllers, microcontrollers, etc. The computing unit 701 performs the various methods and processes described above, such as a method for autonomous driving. For example, in some embodiments, a method for autonomous driving may be implemented as a computer software program, which is tangibly included in a machine readable medium, such as the storage unit 708. In some embodiments, part or all of the computer program may be loaded and/or installed on the device 700 via the ROM 702 and/or the communication unit 709. When the computer program is loaded into the RAM 703 and executed by the computing unit 701, one or more steps of the method for autonomous driving described above may be performed. Alternatively, in other embodiments, the computing unit 701 may be configured to perform a method for autonomous driving by any other appropriate means (for example, by means of firmware).

Various embodiments of the systems and technologies described above can be implemented in digital electronic circuit system, integrated circuit system, field programmable gate array (FPGA), application specific integrated circuit (ASIC), application special standard product (ASSP), system on chip (SOC), complex programmable logic device (CPLD), computer hardware, firmware, software, and/or combinations thereof. These various embodiments may include being implemented in one or more computer programs that may be executed and/or interpreted on a programmable system including at least one programmable processor, which may be a dedicated or general programmable processor that may receive data and instructions from a storage system, at least one input device, and at least one output device, and transmit data and instructions to the storage system, the at least one input device, and the at least one output device.

Program codes for implementing the method of the present disclosure may be written in any combination of one or more programming languages. These program codes may be provided to a processor or controller of a general purpose computer, special purpose computer or other programmable data processing apparatus such that the program codes, when executed by the processor or controller, enables the functions/operations specified in the flowcharts and/or block diagrams being implemented. The program codes may execute entirely on the machine, partly on the machine, as a stand-alone software package partly on the machine and partly on the remote machine, or entirely on the remote machine or server.

In the context of the present disclosure, the machine readable medium may be a tangible medium that may contain or store programs for use by or in connection with an instruction execution system, apparatus, or device. The machine readable medium may be a machine readable signal medium or a machine readable storage medium. The machine readable medium may include, but is not limited to, an electronic, magnetic, optical, electromagnetic, infrared, or semiconductor system, apparatus, or device, or any suitable combination of the foregoing. More specific examples of the machine readable storage medium may include an electrical connection based on one or more wires, portable computer disk, hard disk, random access memory (RAM), read only memory (ROM), erasable programmable read only memory (EPROM or flash memory), optical fiber, portable compact disk read only memory (CD-ROM), optical storage device, magnetic storage device, or any suitable combination of the foregoing.

In order to provide interaction with the user, the systems and techniques described herein may be implemented on a computer having: a display device for displaying information to the user (e.g., a CRT (cathode ray tube) or LCD (liquid crystal display) monitor); a keyboard and a pointing device (e.g., mouse or trackball), through which the user can provide input to the computer. Other kinds of devices can also be used to provide interaction with users. For example, the feedback provided to the user may be any form of sensory feedback (e.g., visual feedback, auditory feedback, or tactile feedback); and the input from the user can be received in any form (including acoustic input, voice input or tactile input).

The systems and technologies described herein may be implemented in a computing system that includes a back-end component (e.g., as a data server), or a computing system that includes a middleware component (e.g., an application server), or a computing system that includes a front-end component (e.g., a user computer with a graphical user interface or a web browser through which the user can interact with an implementation of the systems and technologies described herein), or a computing system that includes any combination of such a back-end component, such a middleware component, or such a front-end component. The components of the system may be interconnected by digital data communication (e.g., a communication network) in any form or medium. Examples of the communication network include: a local area network (LAN), a wide area network (WAN), and the Internet.

The computer system may include a client and a server. The client and the server are generally remote from each other, and generally interact with each other through a communication network. The relationship between the client and the server is generated by virtue of computer programs that run on corresponding computers and have a client-server relationship with each other. The server may be a cloud server, or a server of a distributed system, or a server combined with a blockchain.

The present disclosure also provides an autonomous driving vehicle including the foregoing electronic device.

It should be understood that the various forms of processes shown above may be used to reorder, add, or delete steps. For example, the steps disclosed in the present disclosure may be executed in parallel, sequentially, or in different orders, as long as the desired results of the technical solutions mentioned in the present disclosure can be implemented. This is not limited herein.

The above specific implementations do not constitute any limitation to the scope of protection of the present disclosure. It should be understood by those skilled in the art that various modifications, combinations, sub-combinations, and replacements may be made according to the design requirements and other factors. Any modification, equivalent replacement, improvement, and the like made within the spirit and principle of the present disclosure should be encompassed within the scope of protection of the present disclosure.

## Claims

1. A method for autonomous driving, the method comprising:

   planning (S101) a control mode of a target vehicle through an initial planning algorithm, to obtain an initial control mode;

determining (S102) a first precondition that the target vehicle in an expected traveling state satisfies a preset safety rule, the expected traveling state being an expected state of the target vehicle after the target vehicle is controlled according to the initial control mode; and

controlling (S103) the target vehicle according to the initial control mode, if the first precondition is established.

2. The method according to claim 1, further comprising:
returning (S304) to execute a step of planning the control mode of the target vehicle through the initial planning algorithm to obtain the initial control mode, if the first precondition is not established.

3. The method according to claim 2, further comprising:
adjusting (S401) parameters of the initial planning algorithm according to the first precondition, if the first precondition is not established.

4. The method according to claim 1, wherein after controlling the target vehicle according to the initial control mode, the method further comprises:

determining (S504) a second precondition that the target vehicle in a current traveling state satisfies the preset safety rule; and

adjusting (S505) parameters of the initial planning algorithm and/or adjusting the target vehicle to an initial traveling state, if the second precondition is not satisfied, wherein the initial traveling state is a state of the target vehicle before the target vehicle is controlled according to the initial control mode.

5. The method according to any one of claims 1-4, wherein determining the first precondition that the target vehicle in the expected traveling state satisfies the preset safety rule comprises:

determining (S201) a set of safe traveling states according to the initial control mode and the preset safety rule, wherein the set of safe traveling states is a set of traveling states in which traveling of the target vehicle satisfies the preset safety rule after the target vehicle is controlled according to the initial control mode; and

determining (S202) a following condition as the first precondition: the expected traveling state belongs to the set of safe traveling states.

6. An apparatus for autonomous driving, the apparatus comprising:

a control mode planning module (601), configured to plan a control mode of a target vehicle through an initial planning algorithm, to obtain an initial control mode;

a first precondition determining module (602), configured to determine a first precondition that the target vehicle in an expected traveling state satisfies a preset safety rule, the expected traveling state being an expected state of the target vehicle after the target vehicle is controlled according to the initial control mode; and

a target vehicle controlling module (603), configured to control the target vehicle according to the initial control mode, if the first precondition is established.

7. The apparatus according to claim 6, further comprising:
a control mode returning module, configured to return to execute a step of planning the control mode of the target vehicle through the initial planning algorithm, to obtain the initial control mode, if the first precondition is not established.

8. The apparatus according to claim 7, further comprising:
a first planning algorithm adjusting module, configured to adjust parameters of the initial planning algorithm according to the first precondition, if the first precondition is not established.

9. The apparatus according to claim 6, wherein the apparatus further comprises:

a second precondition determining module, configured to determine a second precondition that the target vehicle in a current traveling state satisfies the preset safety rule; and

a second planning algorithm adjusting module, configured to adjust parameters of the initial planning algorithm and/or adjust the target vehicle to an initial traveling state, if the second precondition is not satisfied, wherein the initial traveling state is a state of target vehicle before the target vehicle is controlled according to the initial control mode.

**10.** The apparatus according to any one of claims 6-9,
wherein the first precondition determining module specifically comprises:

a safe traveling state set submodule, configured to determine a set of safe traveling states according to the initial control mode and the preset safety rule, wherein the set of safe traveling states is a set of traveling states in which traveling of the target vehicle satisfies the preset safety rule after the target vehicle is controlled according to the initial control mode; and
a first precondition determining submodule, configured to determine a condition that the expected traveling state belongs to the set of safe traveling states as the first precondition.

**11.** A non-transitory computer readable storage medium storing computer instructions, wherein the computer instructions are used to cause the computer to perform the method according to any one of claims 1-5.

**12.** A computer program product, comprising a computer
program, wherein the computer program, when executed by a processor, implements the method according to any one of claims 1-5.

Planning a control mode of a target vehicle through an initial planning algorithm, to obtain an initial control mode — S101

Determining a first precondition that the target vehicle in an expected traveling state satisfies a preset safety rule — S102

Controlling the target vehicle according to the initial control mode, if the first precondition is established — S103

Fig. 1

Determining a safe traveling state set according to the initial control mode and the preset safety rule — S201

Determining the following condition as the first precondition: the expected traveling state belongs to the safe driving state set — S202

Fig. 2

Planning a control mode of a target vehicle through an initial planning algorithm, to obtain an initial control mode — S301

Determining a first precondition that the target vehicle in an expected traveling state satisfies a preset safety rule — S302

Controlling the target vehicle according to the initial control mode, if the first precondition is established — S303

Returning to execute S301, if the first precondition is not established — S304

Fig. 3

Planning a control mode of a target vehicle through an initial planning algorithm, to obtain an initial control mode — S401

Determining a first precondition that the target vehicle in an expected traveling state satisfies a preset safety rule — S402

Controlling the target vehicle according to the initial control mode, if the first precondition is established — S403

Returning to execute S401, if the first precondition is not established, and adjusting parameters of the initial planning algorithm according to the first precondition — S404

Fig. 4

Planning a control mode of a target vehicle through an initial planning algorithm, to obtain an initial control mode — S501

Determining a first precondition that the target vehicle in an expected traveling state satisfies a preset safety rule — S502

Controlling the target vehicle according to the initial control mode, if the first precondition is established — S503

Determining a second precondition that the target vehicle in a current traveling state satisfies the preset safety rule — S504

Adjusting parameters of the initial planning algorithm and/or adjusting the target vehicle to an initial driving state, if the second precondition is not established — S505

Fig. 5

Control mode planning module — 601

First precondition determining module — 602

Target vehicle controlling module — 603

Fig. 6

Fig. 7